# EUROPEAN PATENT APPLICATION

(11) **EP 4 632 605 A1**
(43) Date of publication of application: **15.10.2025**
(21) Application number: 23910202.3
(22) Date of filing: 15.12.2023
(51) Int. Cl.: G06F 18/214

(54) **METHOD FOR SENDING TRAINING DATA OF AI MODEL AND COMMUNICATION APPARATUS**

(30) Priority: 30.12.2022 CN 202211730492
(71) Applicant: Huawei Technologies Co., Ltd., Shenzhen, Guangdong 518129 (CN)
(72) Inventor: TIAN, Yang, Shenzhen, Guangdong 518129 (CN); SUN, Yan, Shenzhen, Guangdong 518129 (CN); PANG, Jiyong, Shenzhen, Guangdong 518129 (CN)
(74) Representative: MERH-IP Matias Erny Reichl Hoffmann Patentanwälte PartG mbB
(86) International application number: PCT/CN2023/139008
(87) International publication number: WO 2024/140272

(57) **Abstract**

This application provides a method for sending training data of an AI model, which is applied to a scenario in which a reporting network element of the training data sends the training data to a training network element of the AI model. After obtaining the training data, the reporting network element classifies the training data into reference data and non-reference data, and indicates the training data by sending first-type information and second-type information to the training network element. The first-type information includes full information of the reference data, and the second-type information includes incremental information of the non-reference data relative to reference data corresponding to the non-reference data. The training data is indicated by using the full information of the reference data and the incremental information corresponding to the non-reference data, so as to help reduce overheads of sending the training data, thereby helping reduce air interface overheads in an AI model training or updating process, reduce a transmission delay, and improve model training performance.

## Description

This application claims priority to Chinese Patent Application No. 202211730492.0, filed with the China National Intellectual Property Administration on December 30, 2022 and entitled "METHOD FOR SENDING TRAINING DATA OF AI MODEL AND COMMUNICATION APPARATUS", which is incorporated herein by reference in its entirety.

### TECHNICAL FIELD

Embodiments of this application relate to the field of machine learning, and more specifically, to a method for sending training data of an AI model and a communication apparatus.

### BACKGROUND

At present, artificial intelligence (artificial Intelligence, AI) is introduced into a wireless communication network, and has been widely applied to many application scenarios of an air interface technology, for example, AI-based channel state information (channel state information, CSI) prediction, AI-based CSI feedback, and AI-based positioning.

When an AI model is applied to the air interface technology, both offline and online model updating/training require data collection in an actually deployed network, to form a training dataset needed for model updating/training. When a training network element of the AI model and a reporting network element of training data are not in a same network element, the reporting network element needs to send (or feed back, provide, report, or the like) the training data to the training network element. According to the existing training data sending solution, the training data is usually sent periodically or continuously, resulting in high sending overheads.

### SUMMARY

This application provides a method for sending training data of an AI model and a communication apparatus, to help reduce overheads of sending training data.

According to a first aspect, a method for sending training data of an AI model is provided, and the method can be applied to a training network element of the training data of the AI model. The method includes:
a first network element receives first information from a second network element, where the first information includes first-type information and second-type information, and the first-type information and the second-type information indicate training data of the AI model that is provided by the second network element; and
the training data includes one or more pieces of reference data and non-reference data, the first-type information includes full information of the one or more pieces of reference data, and the second-type information includes incremental information of the non-reference data relative to reference data corresponding to the non-reference data.

According to the method for sending the training data provided in this application, a sending network element of the training data no longer directly sends the training data, but classifies the training data into the reference data and the non-reference data. All training data is indicated to the first network element by sending the full information of the reference data and the incremental information of the non-reference data relative to the reference data corresponding to the non-reference data to the first network element, so that overheads of sending the training data can be reduced.

This helps bring other beneficial technical effects while reducing the overheads of sending the training data.

For example, after the overheads of sending the training data are reduced, when a reporting network element reports a same data volume of the training data to the training network element, in the technical solution of this application, fewer bits may be used to indicate the training data, and fewer air interface resources are occupied in comparison with direct sending of the training data. This helps reduce air interface overheads in an AI model training process.

For another example, after the overheads of sending the training data are reduced, with a same air interface resource occupied, the reporting network element may indicate more training data used for AI model training or updating, so that AI model training performance can be improved. This helps improve performance of a communication system that uses the AI model.

For another example, after the overheads of sending the training data are reduced, compared with direct sending of the training data at a same transmission rate, the technical solution of this application can reduce a transmission delay.

The foregoing beneficial technical effects can improve the performance of the communication system in which the AI model is deployed.

With reference to the first aspect, in some implementations of the first aspect, before the first network element receives the first information from the second network element, the method further includes:
the first network element sends first indication information to the second network element, where the first indication information is used to determine a first clustering algorithm.

In this implementation, the first network element indicates the first clustering algorithm to the second network element, so that the second network element performs clustering processing on the collected training data of the AI model based on the first clustering algorithm to classify the training data into the reference data and the non-reference data, and the second network element reports information obtained through clustering of the training data, which is specifically the full information of the reference data and the incremental information corresponding to the non-reference data. This reduces the overheads of sending the training data.

With reference to the first aspect, in some implementations of the first aspect, the AI model is applied to uplink positioning, the first network element includes a location management function LMF network element, and the second network element includes an access network device; and
the method further includes:
the first network element receives third information from a third network element, where the third information includes the first-type information and the second-type information, and the first-type information and the second-type information that are included in the third information indicate training data provided by the third network element;
the training data includes the training data provided by the second network element and the training data provided by the third network element, the training data provided by the second network element includes a channel measurement result, the channel measurement result includes a channel measurement result belonging to the reference data and a channel measurement result belonging to the non-reference data, the training data provided by the third network element includes location information of the third network element, and the location information includes location information belonging to the reference data and location information belonging to the non-reference data;
the first-type information included in the first information includes full information of the channel measurement result belonging to the reference data, and the second-type information included in the first information includes incremental information corresponding to the channel measurement result belonging to the non-reference data; and
the first-type information included in the third information includes full information of the location information belonging to the reference data, and the second-type information included in the third information includes incremental information corresponding to the location information belonging to the non-reference data.

When the technical solution provided in this application is applied to an uplink positioning scenario, the access network device (namely, the second network element) and/or a PRU/UE (namely, the third network element) perform/performs clustering processing on the provided training data to classify the training data into the reference data and the non-reference data, and report/reports the full information of the reference data and the incremental information corresponding to the non-reference data. This can reduce the overheads of reporting the training data.

According to a second aspect, a method for sending training data of an AI model is provided, and the method can be applied to a providing network element (or referred to as a reporting network element) of the training data of the AI model. The method includes:
a second network element sends first information to a first network element, where the first information includes first-type information and second-type information, and the first-type information and the second-type information indicate training data of the AI model that is provided by the second network element; and
the training data includes one or more pieces of reference data and non-reference data, the first-type information includes full information of the one or more pieces of reference data, and the second-type information includes incremental information of the non-reference data relative to reference data corresponding to the non-reference data.

With reference to the second aspect, in some implementations of the second aspect, the method further includes:
the second network element obtains candidate training data; and
the second network element filters the candidate training data to obtain the training data.

Optionally, a filtering criterion of the training data is not limited in this application. For example, the filtering criterion may include one or more of the following: a threshold of a quality indicator of the training data and a criterion for determining the quality indicator; a quantity threshold of the training data that satisfies the criterion for determining the quality indicator, and a criterion for determining a quantity of training data; and the like. In an example, the quality indicator of the training data may be a SINR of the training data and the quantity of training data, and a criterion for determining the SINR and a criterion for determining the quantity of training data may be: The SINR is greater than or equal to Q, and the quantity of training data is greater than or equal to N, where both Q and N are integers.

To ensure reliable AI air interface performance, it is necessary to maintain the model in time or switch to a non-AI mode in time. The reporting network element of the training data filters collected data, so that redundant invalid data can be deleted. This helps reduce air interface overheads/backhaul overheads caused by training/updating.

Optionally, that the second network element performs clustering processing on the training data includes:
the second network element removes data that is not in any cluster, for example, may discard invalid outlier information.

In some implementations of the first aspect or the second aspect, the one or more pieces of reference data are determined from the training data based on the first clustering algorithm.

In some implementations of the first aspect or the second aspect, the first indication information further indicates the second network element to collect training data of the AI model.

According to this implementation, the first indication information indicates the second network element to collect the training data in addition to indicating the clustering algorithm, so that indication overheads can be reduced.

In some implementations of the first aspect or the second aspect, the method further includes:
the first network element sends second indication information to the second network element, where the second indication information indicates the second network element to collect training data of the AI model.

According to this implementation, the clustering algorithm and the training data of the AI model that the first network element indicates the second network element starts to collect are indicated by using separate messages, so that the clustering algorithm can be flexibly adjusted. In addition, it is convenient for the first network element to indicate, based on a model training/updating requirement, the second network element to collect the training data.

In some implementations of the first aspect or the second aspect, the AI model is applied to downlink positioning, the first network element includes a location management function LMF network element, and the second network element includes a terminal device; and
the training data includes a channel measurement result and/or location information of the second network element, and the channel measurement result is obtained by the second network element based on a positioning reference signal that comes from a third network element.

When the technical solution provided in this application is applied to a downlink positioning scenario, a PRU/UE (namely, the second network element) performs clustering processing on the training data obtained by measuring the positioning reference signal of the third network element (for example, an access network device), to classify the training data into the reference data and the non-reference data, and reports the full information of the reference data and the incremental information corresponding to the non-reference data. This can reduce the overheads of reporting the training data.

Optionally, that the channel measurement result is obtained by the second network element based on the positioning reference signal that comes from the third network element includes:
the channel measurement result is obtained by the second network element based on a plurality of positioning reference signals, where the plurality of positioning reference signals come from one or more third network elements, and the plurality of positioning reference signals are different from each other in terms of one or more of a sending moment, a sending frequency, an occupied frequency band, and a sending port.

According to this implementation, the training data in an uplink positioning scenario may be obtained in a plurality of manners. This helps improve implementation flexibility of the technical solution, so that the technical solution can be implemented in different application scenarios.

In some implementations of the first aspect or the second aspect, the AI model is applied to uplink positioning, the first network element includes a location management function LMF network element, and the second network element includes an access network device; and
the training data includes a channel measurement result, the channel measurement result is obtained by the second network element based on a sounding reference signal that comes from a third network element, the channel measurement result includes a channel measurement result belonging to the reference data and a channel measurement result belonging to the non-reference data, the first-type information includes full information of the channel measurement result belonging to the reference data, and the second-type information includes incremental information corresponding to the channel measurement result belonging to the non-reference data.

According to this implementation, in the uplink positioning scenario, the base station performs clustering on the collected training data, and feeds back full information of some training data (which is specifically the reference data) and incremental information of some training data (which is specifically the non-reference data) to the LMF network element. Then, the LMF network element restores all the training data. This can reduce air interface feedback overheads caused by model training/updating.

Optionally, in AI-based uplink positioning, the channel measurement result is provided by one or more second network elements (for example, a base station) for the first network element (for example, an LMF network element). For one second network element, the channel measurement result is obtained by the second network element by measuring a sounding reference signal that comes from one or more third network elements (for example, a terminal). This is not limited. Optionally, different sounding reference signals are different from each other in terms of one or more of a sending moment, a sending frequency, an occupied frequency band, and a sending port.

In some implementations of the first aspect or the second aspect, the AI model is applied to uplink positioning, the first network element includes a location management function LMF network element, and the second network element includes a terminal device; and
the training data includes location information of the second network element, the location information includes location information belonging to the reference data and location information belonging to the non-reference data, the first-type information includes full information of the location information belonging to the reference data, and the second-type information includes incremental information corresponding to the location information belonging to the non-reference data.

According to this implementation, in the uplink positioning scenario, the PRU/UE performs clustering on the collected training data (which is specifically a label of an output value of the AI model), and feeds back full information of some training data and incremental information of some training data to the first network element. Then, the LMF network element restores the training data. This can reduce air interface feedback overheads caused by model training/updating.

In some implementations of the first aspect or the second aspect, the AI model is applied to CSI prediction, the first network element includes an access network device, and the second network element includes a terminal device;
the training data includes a CSI estimation result obtained by the second network element based on a channel state information-reference signal CSI-RS that comes from the first network element, and the CSI estimation result includes a CSI estimation result belonging to the reference data and a CSI estimation result belonging to the non-reference data; and
the first-type information includes full information of the CSI estimation result belonging to the reference data, and the second-type information includes incremental information corresponding to the CSI estimation result belonging to the non-reference data.

When the technical solution provided in this application is applied to an AI-based CSI prediction scenario, the UE performs clustering processing on the provided training data to classify the training data into the reference data and the non-reference data, and reports the full information of the reference data and the incremental information corresponding to the non-reference data. This can reduce the overheads of reporting the training data.

In some implementations of the first aspect or the second aspect, the AI model is applied to channel state information CSI feedback, the first network element includes an access network device, and the second network element includes a terminal device; and
the training data includes a CSI estimation result obtained by the second network element based on a channel state information-reference signal CSI-RS that comes from the first network element, or the training data includes a CSI estimation result obtained by the second network element based on the CSI-RS and quantized compressed information corresponding to the CSI estimation result.

When the technical solution provided in this application is applied to an AI-based CSI feedback scenario, the UE performs clustering processing on the provided training data to classify the training data into the reference data and the non-reference data, and reports the full information of the reference data and the incremental information corresponding to the non-reference data. This can reduce the overheads of reporting the training data.

In some implementations of the first aspect or the second aspect, the training data includes the CSI estimation result, the CSI estimation result includes a CSI estimation result belonging to the reference data and a CSI estimation result belonging to the non-reference data, the first-type information includes full information of the CSI estimation result belonging to the reference data, and the second-type information includes incremental information corresponding to the CSI estimation result belonging to the non-reference data; or
the training data includes the CSI estimation result and the quantized compressed information of the CSI estimation result, the CSI estimation result includes a CSI estimation result belonging to the reference data and a CSI estimation result belonging to the non-reference data, the first-type information includes full information of the CSI estimation result belonging to the reference data and full information of quantized compressed information of the CSI estimation result belonging to the reference data, and the second-type information includes incremental information corresponding to the CSI estimation result belonging to the non-reference data and incremental information corresponding to quantized compressed information of the CSI estimation result belonging to the non-reference data.

According to this implementation, based on whether the model on the UE side is trained and delivered by the base station, there are two cases in which the UE performs clustering processing on the training data. If the model on the UE side is trained and delivered by the base station, the UE performs clustering on the channel measurement result obtained by measuring the CSI-RS, to classify the training data into the reference data and the non-reference data, and then reports information obtained through clustering (which is specifically the full information of the reference data and the incremental information corresponding to the non-reference data). This can reduce the overheads of reporting the training data. If the model on the UE side does not depend on training and delivery by the base station side, the UE separately performs clustering on the channel measurement result obtained by measuring the CSI-RS and the corresponding quantized compressed information, and then reports information obtained through clustering. This reduces the overheads of reporting the training data.

According to a third aspect, this application provides a communication apparatus. In a design, the communication apparatus may include modules that are in one-to-one correspondence with and that are configured to perform the method/operations/steps/actions described in the first aspect. The module may be a hardware circuit, may be software, or may be implemented by a hardware circuit in combination with software. In a design, the communication apparatus may include a processing module and a communication module. In an example, the communication apparatus is a positioning device or an access network device, and the positioning device may be, for example, an LMF network element.

According to a fourth aspect, this application provides a communication apparatus. In a design, the communication apparatus may include modules that are in one-to-one correspondence with and that are configured to perform the method/operations/steps/actions described in the second aspect. The module may be a hardware circuit, may be software, or may be implemented by a hardware circuit in combination with software. In a design, the communication apparatus may include a processing module and a communication module. In an example, the communication apparatus is a terminal device, for example, a PRU or a common terminal.

Optionally, the PRU may be considered as a special network element, and may be usually configured by a network vendor. For example, the network vendor may configure one or more of a location, a sending capability, a receiving capability, a processing capability, and the like of the PRU. The PRU may provide location information of the PRU for an access network device, and may also be referred to as a position reference device. For example, the PRU may be a reference UE or an automated guided vehicle (automated guided vehicle, AGV). It should be understood that the common UE in this embodiment of this application is relative to the PRU. The common UE may obtain location information of the common UE by using some positioning methods, and then provide the location information for a positioning device.

According to a fifth aspect, this application provides a communication apparatus. The communication apparatus includes a processor, configured to implement the method according to any one of the first aspect or the implementations of the first aspect. The processor is coupled to a memory. The memory is configured to store instructions and data. When the processor executes the instructions stored in the memory, the method according to any one of the first aspect or the implementations of the first aspect can be implemented. Optionally, the communication apparatus may further include the memory. Optionally, the communication apparatus may further include a communication interface. The communication interface is used by the apparatus to communicate with another device. For example, the communication interface may be a transceiver, a hardware circuit, a bus, a module, a pin, or another type of communication interface. In an example, the communication apparatus may be a positioning device or an access network device, may be an apparatus, a module, a chip, or the like that is disposed in the positioning device/access network device, or is an apparatus that can be used collaboratively with the positioning device/access network device.

According to a sixth aspect, this application provides a communication apparatus. The communication apparatus includes a processor, configured to implement the method according to any one of the second aspect or the implementations of the second aspect. The processor is coupled to a memory. The memory is configured to store instructions and data. When the processor executes the instructions stored in the memory, the method according to any one of the second aspect or the implementations of the second aspect can be implemented. Optionally, the communication apparatus may further include the memory. Optionally, the communication apparatus may further include a communication interface. The communication interface is used by the apparatus to communicate with another device. For example, the communication interface may be a transceiver, a hardware circuit, a bus, a module, a pin, or another type of communication interface. In an example, the communication apparatus may be a terminal device, may be an apparatus, a module, a chip, or the like that is disposed in the terminal device, or is an apparatus that can be used collaboratively with the terminal device.

According to a seventh aspect, this application provides a communication system, including a first network element and a second network element. For example, interaction between the first network element and the second network element is as follows:

The first network element receives first information from the second network element, where the first information includes first-type information and second-type information, and the first-type information and the second-type information indicate training data of an AI model that is provided by the second network element; and
the training data includes one or more pieces of reference data and basic data, the first-type information includes full information of the one or more pieces of reference data, and the second-type information includes incremental information of the basic data relative to reference data corresponding to the basic data.

Specifically, the first network element can be understood with reference to the implementations of the first aspect, and the second network element can be understood with reference to the implementations of the second aspect. Details are not described herein again. For example, the communication system includes a terminal device and an access network device in an AI-based CSI prediction or CSI feedback application scenario or the like. Optionally, the communication system includes a terminal device, an access network device, and a positioning device in an AI-based positioning scenario or the like.

According to an eighth aspect, this application provides a communication system, including the communication apparatus according to the third aspect or the fifth aspect and the communication apparatus according to the fourth aspect or the sixth aspect.

According to a ninth aspect, this application further provides a computer program. When the computer program is run on a computer, the computer is enabled to perform the method provided in any one of the first aspect, the second aspect, or the implementations of the first aspect or the second aspect.

According to a tenth aspect, this application further provides a computer program product, including instructions. When the instructions are run on a computer, the computer is enabled to perform the method according to any one of the first aspect, the second aspect, or the implementations of the first aspect or the second aspect.

According to an eleventh aspect, this application further provides a computer-readable storage medium. The computer-readable storage medium stores a computer program or instructions. When the computer program or instructions are run on a computer, the computer is enabled to perform the method according to any one of the first aspect, the second aspect, or the implementations of the first aspect or the second aspect.

According to a twelfth aspect, this application further provides a chip. The chip is configured to read a computer program stored in a memory, to perform the method according to any one of the first aspect, the second aspect, or the implementations of the first aspect or the second aspect; or the chip includes a circuit configured to perform the method according to any one of the first aspect, the second aspect, or the implementations of the first aspect or the second aspect.

According to a thirteenth aspect, this application further provides a chip system. The chip system includes a processor, configured to support an apparatus in implementing the method according to any one of the first aspect, the second aspect, or the implementations of the first aspect or the second aspect. In a possible design, the chip system further includes a memory. The memory is configured to store a program and data that are necessary for the apparatus. The chip system may include a chip, or may include a chip and another discrete device.

For technical effects of the solutions provided in any one of the second aspect to the thirteenth aspect or the implementations of the second aspect to the thirteenth aspect, refer to corresponding descriptions in the first aspect. Details are not described again.

### BRIEF DESCRIPTION OF DRAWINGS

FIG. 1 is diagrams of architectures of communication systems to which an embodiment of this application is applicable;
FIG. 2 is a schematic flowchart of a method 200 for sending training data of an AI model according to this application;
FIG. 3 is a diagram of downlink positioning based on an AI model;
FIG. 4 shows an example of applying a technical solution provided in this application to AI-based downlink positioning;
FIG. 5 is a diagram of uplink positioning based on an AI model;
FIG. 6 shows an example of applying a technical solution provided in this application to AI-based uplink positioning;
FIG. 7 is a diagram of CSI prediction based on an AI model;
FIG. 8 shows an example of applying a technical solution provided in this application to AI-based CSI prediction;
FIG. 9 is a diagram of an AI-based CSI feedback process;
FIG. 10 shows an example of applying a technical solution provided in this application to AI-based CSI feedback;
FIG. 11 is a diagram of a communication apparatus 1000 according to this application; and
FIG. 12 is another diagram of a communication apparatus 1100 according to this application.

### DESCRIPTION OF EMBODIMENTS

The following describes technical solutions of this application with reference to accompanying drawings.

The technical solutions provided in this application can be applied to various communication systems, for example, a long term evolution (long term evolution, LTE) system, a 5th generation (5th generation, 5G) communication system, worldwide interoperability for microwave access (worldwide interoperability for microwave access, WiMAX), a wireless local area network (wireless local area network, WLAN) system, a satellite communication system, future communication systems such as a 6G communication system, and a system integrating a plurality of systems. The 5G communication system may also be referred to as a new radio (new radio, NR) system.

For example, the communication system may include a terminal device and a network device.

In embodiments of this application, the terminal device may be an entity, for example, a mobile phone, that is on a user side and that is configured to receive or transmit a signal. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device can be widely applied to various scenarios, for example, cellular communication, a wireless fidelity (wireless fidelity, Wi-Fi) system, device-to-device (device-to-device, D2D), an internet of vehicles (vehicle-to-everything, V2X), peer-to-peer (peer-to-peer, P2P), machine-to-machine (machine-to-machine, M2M), machine type communication (machine type communication, MTC), an internet of things (internet of things, IoT), virtual reality (virtual reality, VR), augmented reality (augmented reality, AR), industrial control, self-driving, telemedicine, a smart grid, smart furniture, a smart office, smart wear, intelligent transportation, a smart city, an uncrewed aerial vehicle, robotics, remote sensing, passive sensing, positioning, navigation and tracking, and self-delivery and mobility. Some examples of the terminal device 120 are as follows: a user equipment (user equipment, UE) in a 3GPP standard, a station (station, STA) in a Wi-Fi system, a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart household device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self-driving (self-driving), a wireless terminal in a smart grid (smart grid), a wireless terminal in transportation safety (transportation safety), wireless terminals in a smart city (smart city) like a smart fuel dispenser and a terminal device on a high-speed railway, and wireless terminals in a smart home (smart home) like a smart speaker, a smart coffee machine, and a smart printer. The terminal device may be a wireless device in the foregoing various scenarios or an apparatus disposed in the wireless device, for example, a communication module, a modem, or a chip in the foregoing device. The terminal device may also be referred to as a terminal, a UE, a mobile station (mobile station, MS), a mobile terminal (mobile terminal, MT), or the like. The terminal device may be alternatively a terminal device in a future wireless communication system. In addition, the terminal device may further include a position reference device, for example, an automated guided vehicle (automated guided vehicle, AGV) or a device having a similar function. For ease of description, the following uses an example in which the terminal device is a UE for description.

In this application, a communication apparatus configured to implement functions of the terminal device may be a terminal device, may be a terminal device having some functions of the foregoing communication device, or may be an apparatus that can support implementation of the functions of the terminal device, for example, a chip system. The apparatus may be installed in the terminal device or used collaboratively with the terminal device. In this application, the chip system may include a chip, or may include a chip and another discrete device.

The network device may be a device that provides a wireless communication function service, may communicate with the terminal device, and is usually located on a network side. The network device may be referred to as an access network device or a radio access network device. For example, the network device may be a base station. For example, the access network device in embodiments of this application includes but is not limited to a next generation NodeB (gNodeB, gNB) in a 5G communication system, a base station in a 6th generation (6th generation, 6G) mobile communication system, a base station in a future mobile communication system, an access node (access point, AP) in a Wi-Fi system, an evolved NodeB (evolved NodeB, eNB) in an LTE system, a radio network controller (radio network controller, RNC), a NodeB (NodeB, NB), a base station controller (base station controller, BSC), a home NodeB (for example, a home evolved NodeB or a home NodeB, HNB), a baseband unit (baseband unit, BBU), a transmission reception point (transmission reception point, TRP), a transmission point (transmission point, TP), a base transceiver station (base transceiver station, BTS), a satellite, and an uncrewed aerial vehicle. In a network structure, the network device may include a central unit (central unit, CU) node, may include a distributed unit (distributed unit, DU) node, may be a RAN device including a CU node and a DU node, or may be a RAN device including a CP control plane node, a CU user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may be alternatively a communication module, a modem, or a chip that is disposed in the foregoing device or apparatus. The base station may be alternatively a mobile switching center, a device that performs a base station function in device-to-device (device-to-device, D2D), vehicle-to-everything (vehicle-to-everything, V2X), or machine-to-machine (machine-to-machine, M2M) communication, a network side device in a 6G network, a device that performs a base station function in a future communication system, or the like. The base station can support networks using a same access technology or different access technologies. This is not limited. The base station may be immovable or movable. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In this application, an apparatus configured to implement functions of the network device may be an access network device, may be a network device having some functions of an access network, or may be an apparatus that can support implementation of the functions of the access network, for example, a chip system, a hardware circuit, a software module, or a combination of a hardware circuit and a software module. The apparatus may be installed in the access network device or used collaboratively with the access network device. In a method in this application, an example in which the communication apparatus configured to implement the functions of the access network device is an access network device is used for description.

Optionally, the communication system further includes at least one AI node.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (OTT, over the top) system. The AI node may communicate with other devices in the communication system. The other devices may be, for example, one or more of the following: a network device, a terminal device, a network element of a core network, or the like.

Optionally, the AI node is configured to perform an AI-related operation. For example, the AI-related operation may include, for example, one or more of the following: model failure testing, model performance testing, model training, data collection, or the like.

For example, the network device may forward, to the AI node, data that is related to an AI model and that is reported by the terminal device, and the AI node performs the AI-related operation. For another example, the network device or the terminal device may forward data related to an AI model to the AI node, and the AI node performs the AI-related operation. For another example, the AI node may send, to the network device and/or the terminal device, an output of the AI-related operation, for example, one or more of the following: a trained neural network model, a model evaluation result, a model test result, or the like. For example, the AI node may directly send an output of the AI-related operation to the network device and the terminal device. For another example, the AI node may send an output of the AI-related operation to the terminal device through the network device. For another example, the AI node may send an output of the AI-related operation to the network device through the terminal device.

It can be understood that a quantity of AI nodes is not limited in this application. For example, when there are a plurality of AI nodes, the plurality of AI nodes may be classified based on functions. For example, different AI nodes are responsible for different functions.

It can also be understood that the AI nodes may be independent devices, may be integrated into a same device to implement different functions, may be network elements in a hardware device, may be software functions running on dedicated hardware, or may be virtualized functions instantiated on a platform (for example, a cloud platform). Specific forms of the AI nodes are not limited in this application.

For ease of understanding, the following briefly describes related technologies or concepts in this application.

An AI model is an algorithm or a computer program that can implement an AI function. The AI model represents a mapping relationship between an input and an output of the model, or the AI model is a function model that maps an input of a specific dimension to an output of a specific dimension. A model parameter of the AI model is obtained through machine learning training. For example, f(x)=ax2+b is a quadratic function model, and may be considered as an AI model, where a and b are parameters of the AI model, and may be obtained through machine learning training. For example, the AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

A training dataset is data used for model training, validation, and testing in machine learning. An amount and quality of the data affect machine learning effect. The training data may include an input of an AI model, or include an input and a target output of the AI model. The target output is a target value output by the AI model, and may also be referred to as an output ground truth, an output ground truth, a label, or a label sample.

Model training is a process of training a model parameter by selecting a proper loss function and using an optimization algorithm, so that a value of the loss function is less than a threshold or a value of the loss function meets a target requirement.

An AI model design mainly includes a data collection stage (for example, collection of training data and/or inference data), a model training stage, and a model inference stage, and may further include an inference result application stage. At the data collection stage, a data source (data source) is used to provide a training dataset and inference data. At the model training stage, training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. At the model inference stage, the AI model obtained through training at the model training stage is used to perform inference based on the inference data provided by the data source, to obtain an inference result. This stage can also be understood as follows: The inference data is input into the AI model, to obtain an output by using the AI model. The output is the inference result. The inference result may indicate a configuration parameter used (executed) by an actor object, and/or an operation performed by the actor object. The inference result is published at the inference result application stage. For example, the inference result may be planned by a same actor (actor) entity. For example, the actor entity may send the inference result to one or more actor objects (for example, a core network device, an access network device, or a terminal device) for execution. For another example, the actor entity may further feed back performance of the model to the data source, to facilitate subsequent model updating and training.

A loss function is used to measure a difference between a predicted value and a true value of a model.

Model application is to use a trained model to resolve a practical problem.

It can be understood that the AI model may be implemented by using a hardware circuit, software, or a combination of software and hardware. This is not limited. A non-limitative example of the software includes program code, a program, a subprogram, instructions, an instruction set, code, a code segment, a software module, an application, a software application, or the like.

In embodiments of this application, "indications" may include a direct indication, an indirect indication, an explicit indication, and an implicit indication. That a piece of indication information indicates A can be understood as follows: The indication information carries A, and may directly indicate A or indirectly indicate A. The indirect indication may mean that the indication information directly indicates B and a correspondence between B and A, to indicate A by using the indication information. The correspondence between B and A may be predefined in a protocol, prestored, or obtained by using a configuration between network elements.

This application provides a method for sending training data by a reporting network element of training data to a training network element, to help reduce overheads of sending the training data by the reporting network element to the training network element.

A wireless communication system to which this application is applicable may include one or more network side devices and one or more terminal devices. The network side device may include the foregoing access network device, and optionally may further include a core network device. This is not limited. The device may also be replaced with a network element, an entity, a network entity, a communication device, a communication module, a node, a communication node, or the like. In this application, a device or a network element is used as an example for description.

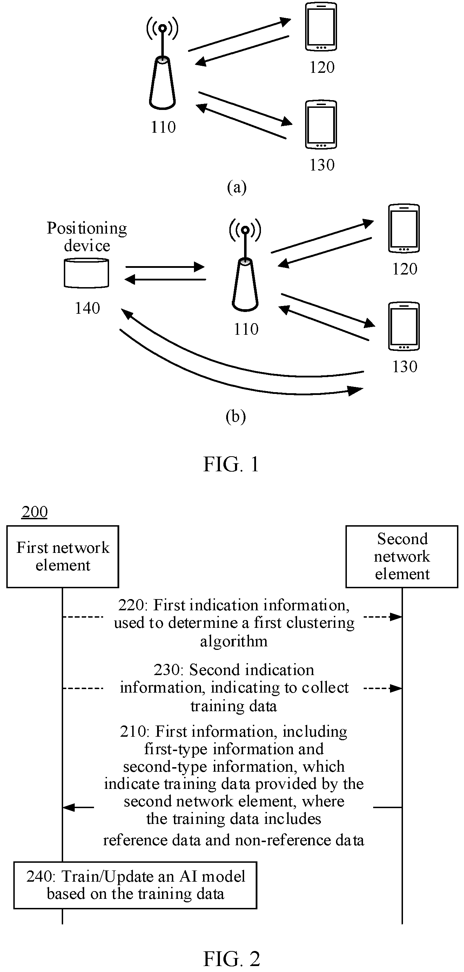

FIG. 1 is diagrams of architectures of communication systems to which an embodiment of this application is applicable. (a) in FIG. 1 is a diagram of an architecture of a communication system to which an embodiment of this application is applicable. For example, the communication system includes a network device 110, a terminal device 120, and a terminal device 130. The terminal devices 120 and 130 may access the network device 110, and communicate with the network device 110. Optionally, the network device 110 may be an access network device. In an implementation, the communication system may further include an AI entity. The network device 110 may forward, to the AI entity, data that is related to an AI model and that is reported by a terminal device. The AI entity performs AI-related operations such as training dataset construction and model training, and provides outputs of the AI-related operations such as a trained AI model, a model evaluation result, and a model test result for the network device 110. In another implementation, the AI entity may be alternatively located inside the network device 110, that is, being a module of the network device 110. (b) in FIG. 1 is another diagram of an architecture of a communication system to which an embodiment of this application is applicable. The communication system includes a network device 110, a terminal device 120, a terminal device 130, and a positioning device 140. The positioning device 140 and the network device 110 may communicate with each other by using an interface message. For example, the positioning device 140 is a location management function (location management function, LMF), and the network device 110 may be an access network device, for example, a gNB or an eNB. This is not limited. For example, if the access network device 110 is a gNB, the gNB and the LMF may exchange information by using an NR positioning protocol A (NR positioning protocol A, NRPPa) message. If the access network device 110 is an eNB, the eNB and the LMF may exchange information by using an LTE positioning protocol (LTE positioning protocol, LPP) message. Optionally, a terminal device may also directly communicate with the positioning device 140, for example, interaction between the terminal device 130 and the positioning device 140 shown in (b) in FIG. 1. In FIG. 1, the AI entity may be configured inside the positioning device 140, or may be disposed separately from the positioning device 140. This is not limited.

It should be understood that FIG. 1 is merely a diagram. Devices included in the wireless communication system vary with different application scenarios. For example, (a) in FIG. 1 is applicable to application scenarios such as AI-based CSI feedback and AI-based CSI prediction. (b) in FIG. 1 is applicable to an AI-based positioning scenario. In addition, the communication system may further include other devices, for example, a core network device, a wireless relay device, a wireless backhaul device, and/or a device configured to implement an artificial intelligence function. The other devices are not shown in FIG. 1.

In actual application, the wireless communication system may include a plurality of network devices (for example, an access network device and a core network device), or may include a plurality of terminal devices. This is not limited. One access network device may serve one or more terminal devices. One terminal device may also access one or more access network devices. Quantities of terminal devices and network devices included in the wireless communication system are not limited in embodiments of this application.

FIG. 2 is a schematic flowchart of a method 200 for sending training data of an AI model according to this application. The method 200 involves a first network element and a second network element. The first network element may be a training network element of the AI model, and the second network element is a providing network element or a reporting network element of the training data of the AI model. Optionally, the first network element and the second network element may be logically deployed separately. In different implementations, the first network element and the second network element may be physically deployed in a same network element or different network elements. This is not limited.

210: The first network element receives first information from the second network element, where the first information includes first-type information and second-type information, and the first-type information and the second-type information indicate training data of the AI model that is provided by the second network element.

The training data includes one or more pieces of reference data and non-reference data. The first-type information includes full information of the one or more pieces of reference data, and the second-type information includes incremental information of the non-reference data relative to reference data corresponding to the non-reference data.

In an implementation, the one or more pieces of reference data are determined from the training data based on a first clustering algorithm. In this implementation, the reference data and the non-reference data are determined by using the first clustering algorithm. To be specific, clustering is performed on the training data by using the first clustering algorithm, so that the training data is classified into the reference data and the non-reference data. The reference data can also be understood as a center of a cluster, and the non-reference data is a data point in the cluster other than the center. There may be one or more reference data points, depending on specific training data and a specific clustering algorithm.

It should be understood that clustering (clustering) belongs to unsupervised learning in machine learning, and is to divide a dataset into different classes or clusters (clusters) according to a specific standard (for example, a distance), so that data in a same cluster is similar to each other as much as possible, and data that is not in a same cluster is different from each other as much as possible. In other words, after clustering, data of a same type is aggregated as much as possible, and data of different types is separated from each other as much as possible.

In embodiments of this application, a specific clustering algorithm is not limited. For example, the first clustering algorithm may include but is not limited to the following clustering algorithms:
Partitioning-based clustering, for example, K-means: A cluster center is determined and a distance between each data point and the cluster center is calculated to perform class assignment, with a fast convergence speed.

Density-based clustering, for example, density-based spatial clustering of applications with noise (density-based spatial clustering of applications with noise, DBSCAN): Extension may be started from a core point to a density-reachable area to obtain a maximum area including a core point and a border point. A quantity of clusters does not need to be specified, a shape of the cluster is indefinite, and the cluster is insensitive to noise.

Hierarchical clustering, for example, hierarchical DBSCAN (hierarchical density-based spatial clustering of applications with noise, HDBSCAN): A reachable distance is used as an adjacent edge weight to form a minimum spanning tree for all nodes, and hierarchical clustering and cluster compression are performed. Hierarchical clustering features a fast speed, a changeable cluster density, and low parameter sensitivity, and needs to define only a minimum quantity of clusters.

Graph-based clustering, for example, spectral clustering (spectral clustering): K-means clustering is performed after data space is transformed, and then transformed space is restored to the original space. A dimensionality reduction idea is introduced to improve clustering effect on high-dimensional space. For another example, in Chinese Whispers, only a similarity threshold needs to be specified, and a quantity of clusters and the like are not set.

Network-based clustering, for example, STING: Data space is divided into rectangular cells, and clustering is performed on the rectangular cells. A clustering speed is related to a quantity of units obtained through division, and an operation speed is high. For another example, in CLIQUE, data space is divided into rectangular cells that do not intersect each other, and data density units are connected to each other to form a cluster. Performance is high, and a data unit in which a high-density data sample object is located can be found. For still another example, in WAVE CLUSTER, data space is divided into frequency domain space of a grid structure, and a natural clustering attribute of data is obtained by performing convolution with a kernel function. Clustering with a plurality of resolutions may be performed, has desirable noise resistance, and is applicable to a huge dataset.

Fuzzy clustering, for example, fuzzy C-means (fuzzy C-means, FCM): has desirable clustering effect on data that satisfies normal distribution.

Alternatively, the first clustering algorithm may be the following clustering algorithms derived from the foregoing clustering algorithms:
deep clustering based on K-means clustering, deep clustering based on a Gaussian mixture model, deep clustering based on subspace clustering, deep clustering based on spectral clustering, deep clustering based on mutual information, deep clustering based on an autoencoder, deep clustering based on a deep neural network, deep clustering based on a variational autoencoder, deep clustering based on a generative adversarial network, DBSCAN with noise, and the like.

In another implementation, the one or more pieces of reference data are negotiated, agreed, or set by the first network element and the second network element in advance. For example, a differential scheme applied to CSI prediction is used. For example, the first network element and the second network element agree in advance that reference data is reported once at an interval of one time period, and non-reference data is reported between two times of reporting reference data. After reference data is reported once, non-reference data corresponding to the reference data is reported after the reference data. Specifically, the second network element indicates the full information of the reference data by using the first-type information, and indicates, by using the second-type information, the incremental information of the non-reference data relative to the reference data corresponding to the non-reference data. The incremental information of the non-reference data relative to the reference data is determined by performing a differential operation on the non-reference data and the reference data corresponding to the non-reference data.

Optionally, step 220 is further included before step 210. For example, the first clustering algorithm may be predefined in a protocol, prestored, or preconfigured. In these cases, the first clustering algorithm is known to the first network element and the second network element, and therefore the first network element does not need to indicate the first clustering algorithm to the second network element. Otherwise, the first network element needs to indicate the first clustering algorithm to the second network element.

220: The first network element sends first indication information to the second network element, where the first indication information is used to determine the first clustering algorithm.

In an example, the first indication information explicitly indicates the first clustering algorithm. For example, the first indication information indicates a K-means clustering algorithm.

In another example, the first network element preconfigures a correspondence between a plurality of indexes and a plurality of clustering algorithms, and the first indication information indicates one index. For example, the correspondence between the plurality of indexes and the plurality of clustering algorithms is listed in Table 1. The first indication information indicates, to the second network element by indicating indexes 0, 1, and 2, clustering algorithms respectively corresponding to these indexes. In this example, the preconfiguration is merely used as an example. The correspondence may be alternatively predefined in a protocol, prestored, or the like. This is not limited.

**Table 1**

| Index | Clustering algorithm |
|---|---|
| 0 | K-means clustering algorithm |
| 1 | DBSCAN clustering algorithm |
| 2 | Deep clustering algorithm based on an autoencoder |

Optionally, in an example, the first network element preconfigures a correspondence between a plurality of indexes and a plurality of AI model-based application scenarios. A clustering algorithm used for reporting training data in each application scenario may be predefined in a protocol, preconfigured, prestored, or the like. Table 2 is used as an example. The first indication information indicates one index. Based on the correspondence between the plurality of indexes and the plurality of application scenarios, the second network element may determine an application scenario corresponding to the index indicated by the first indication information, and determine a clustering algorithm in the application scenario.

**Table 2**

| Index | AI-based application scenario |
|---|---|
| 0 | CSI feedback |
| 1 | Uplink positioning |
| 2 | Downlink positioning |
| 3 | CSI prediction |

Optionally, one application scenario may be corresponding to a plurality of clustering algorithms, indexes of clustering algorithms respectively corresponding to different application scenarios are different from each other, and clustering algorithms corresponding to different indexes may be preconfigured, prestored, or predefined in a protocol, as listed in Table 3. Alternatively, indexes of clustering algorithms respectively corresponding to different application scenarios may be the same, as listed in Table 4. In the example in Table 4, the first indication information may indicate an application scenario and an index value. For example, different identifiers may be preconfigured for application scenarios. For example, CSI feedback, uplink positioning, downlink positioning, and CSI prediction are corresponding to identifiers A, B, C, and D, respectively. The first indication information indicative of A0 indicates a clustering algorithm corresponding to the CSI feedback, the first indication information indicative of B0 indicates a clustering algorithm corresponding to an index 0 in the uplink positioning scenario, and so on.

**Table 3**

| Index | AI-based application scenario |
|---|---|
| 0 | CSI feedback |
| 1 | Uplink positioning |
| 2 | |
| 3 | Downlink positioning |
| 4 | |
| 5 | CSI prediction |

**Table 4**

| Index | AI-based application scenario |
|---|---|
| 0 | CSI feedback |
| 0 | Uplink positioning |
| 1 | |
| 0 | Downlink positioning |
| 1 | |
| 0 | CSI prediction |

The second network element determines the first clustering algorithm based on the first indication information, and uses the first clustering algorithm to perform clustering on the training data.

Optionally, the first indication information further indicates the second network element to collect training data of the AI model. The first indication information indicates the first clustering algorithm, and implicitly indicates the second network element to collect the training data of the AI model, so that indication overheads can be reduced.

Alternatively, the first network element may indicate, by using a separate message, the second network element to collect training data of the AI model. In this case, step 230 is further included before step 210.

230: The first network element sends second indication information to the second network element, where the second indication information indicates the second network element to collect the training data.

Further, optionally, the method 200 further includes step 240.

240: The first network element trains or updates the AI model based on the training data.

After the first network element obtains the training data reported by the second network element, the training data may be used for training, updating, or the like of the AI model. This is not specifically limited.

According to the method for sending the training data provided in this application, a sending network element of the training data no longer directly sends the training data, but performs clustering processing on the training data by using the clustering algorithm, to classify the training data into the reference data and the non-reference data. Then, all training data is indicated to the first network element by sending the full information of the reference data and the incremental information of the non-reference data relative to the reference data corresponding to the non-reference data to the first network element, so that overheads of sending the training data can be reduced.

The following describes application of the technical solutions of this application with reference to some application scenarios.

In some examples, AI model application scenarios include but are not limited to the following scenarios:
AI-based (AI-based) downlink positioning, AI-based uplink positioning, AI-based CSI prediction, or AI-based CSI feedback.

The following separately describes application of the method for sending the training data of the AI model provided in this application to these application scenarios.

### 1. AI-based downlink positioning

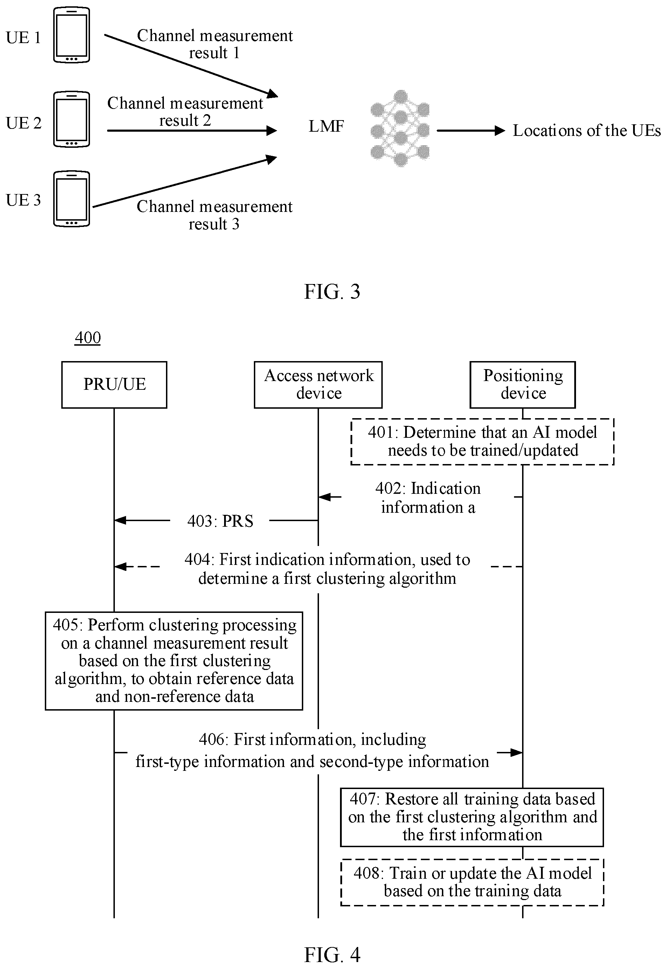

FIG. 3 is a diagram of downlink positioning based on an AI model. As shown in FIG. 3, in downlink positioning, AI model training is performed by a positioning device on a network side, for example, a location management function (location management function, LMF) network element. For the AI model deployed on the positioning device, a channel measurement result like a channel impulse response (channel impulse response, CIR) obtained by a positioning reference unit (positioning reference unit, PRU) or a common UE by measuring a positioning reference signal sent by an access network device is used as an input, and a location of the PRU or the UE is used as an output. Optionally, the positioning reference signal may come from one or more access network devices. This is not limited. When the positioning device performs AI model training, the positioning device needs to obtain, from the PRU/UE side, the channel measurement result obtained by the PRU/UE by performing channel estimation based on the PRS that is sent by the access network device and that is received by the PRU/UE, and location information of the PRU/common UE to perform training.

Optionally, the channel measurement result includes but is not limited to a CIR, a channel time domain quality indicator calculated based on the CIR, a channel frequency response (channel frequency response, CFR), a channel frequency domain quality indicator calculated based on the CFR, a power delay profile (power delay profile, PDP), a channel quality indicator calculated based on the PDP, or the like. The CIR may be a normalized CIR, and the CFR may be a normalized CFR. This is not limited. When the channel time domain quality indicator is calculated based on the CIR, a quantity of sampling points is not limited. When the channel frequency domain quality indicator is calculated based on the CFR, a bandwidth, a subband, and a quantity of ports corresponding to the CFR are not limited. Alternatively, the channel measurement result may be represented by using other quality indicators, which are not enumerated. The descriptions of the channel measurement result are applicable to all the following embodiments, and are not described again in the following.

FIG. 4 shows an example of applying a technical solution provided in this application to AI-based downlink positioning. In the example of downlink positioning, the first network element is a positioning device, and the second network element is a PRU or a UE. The access network device may be referred to as a third network element.

401: Optionally, the positioning device determines that an AI model needs to be trained or updated.

402: The positioning device sends indication information a to the access network device, where the indication information a indicates the access network device to send a PRS.

403: The access network device sends the PRS to the PRU/UE.

The PRU/UE receives the PRS that comes from the access network device, and obtains a channel measurement result.

404: Optionally, the positioning device sends first indication information to the UE, where the first indication information is used by the UE to determine a first clustering algorithm.

Optionally, the first indication information further implicitly indicates the UE to collect training data of the AI model.

Optionally, in another implementation, the positioning device may indicate, by using a separate piece of information, the UE to collect training data of the AI model. For example, the positioning device sends indication information b to the UE, where the indication information b indicates the UE to collect the training data of the AI model.

It should be understood that a sequence of step 402 and step 404 is not limited.

405: The PRU/UE performs clustering processing on the channel measurement result based on the first clustering algorithm, to obtain reference data and non-reference data. Optionally, the PRU/UE performs clustering processing on a location of the PRU/UE corresponding to the channel measurement result, to obtain the reference data and the non-reference data.

Optionally, in a clustering process, if a channel measurement result that is not in any cluster exists, the channel measurement result is removed.

Optionally, the PRU/UE may further first filter the channel measurement result (which can be understood as a candidate channel measurement result) obtained by measuring the PRS, and then perform clustering processing on a channel measurement result obtained through filtering. This is not limited.

Optionally, during clustering processing, there are one or more pieces of reference data, depending on a specific clustering algorithm and specific training data.

In addition, for the channel measurement results obtained by the PRU/UE by measuring the PRS, each of the channel measurement results may be corresponding to one piece of location information, or only some channel measurement results may be corresponding to location information. This is not limited. For example, the PRU/UE obtains 10 channel measurement results by measuring the PRS, where each of the 10 channel measurement results may be corresponding to one piece of location information. During clustering, the PRU/UE performs clustering on the 10 channel measurement results, and performs clustering on 10 pieces of location information corresponding to the 10 channel measurement results, to separately obtain reference data and non-reference data regarding the channel measurement results and reference data and non-reference data regarding the location information. For another example, the PRU/UE obtains 10 channel measurement results by measuring the PRS. The PRU/UE reports location information corresponding to six channel measurement results in the 10 channel measurement results, and does not report location information corresponding to the remaining four channel measurement results. During clustering, the PRU/UE performs clustering on the 10 channel measurement results, and performs clustering on six pieces of location information corresponding to the six channel measurement results, to separately obtain reference data and non-reference data regarding the channel measurement results and reference data and non-reference data regarding the location information. For still another example, the PRU/UE reports only channel measurement results, but does not report location information corresponding to the channel measurement results. In this example, during clustering, the PRU/UE performs clustering on the 10 channel measurement results, to obtain reference data and non-reference data.

406: The PRU/UE sends first information to the positioning device, where the first information includes first-type information and second-type information. Specifically, the first-type information includes full information of the one or more pieces of reference data, and the second-type information includes incremental information of the non-reference data relative to reference data corresponding to the non-reference data.

It should be understood that, if the training data includes the channel measurement result, the reference data and the non-reference data in step 406 are respectively the reference data and the non-reference data that are obtained by performing clustering processing on the channel measurement result. If the training data includes the channel measurement result and the location information corresponding to the channel measurement result, the reference data and the non-reference data in step 406 include the reference data and the non-reference data that are obtained by performing clustering processing on the channel measurement result, and reference data and non-reference data that are obtained by performing clustering processing on the location information.

It should be understood that non-reference data is relative to reference data. For example, it is assumed that there are 10 pieces of training data. After clustering processing is performed, the 10 pieces of training data are classified into two clusters, and the two clusters each have one piece of reference data and several pieces of non-reference data. When the 10 pieces of training data are indicated, the first-type information indicates full information of all reference data, for example, full information of reference data of each of the two clusters, and the second-type information indicates incremental information of each piece of non-reference data relative to reference data corresponding to the non-reference data.

Two-dimensional training data is used as an example. It is assumed that one piece of reference data is determined through clustering, the reference data is (25, 25), and a piece of non-reference data is (26, 26). In this case, incremental information of the non-reference data relative to the reference data is (1, 1).

The positioning device receives the first information from the PRU/UE.

407: The positioning device restores the one or more pieces of reference data and the non-reference data based on the first clustering algorithm and the first information, that is, restores all training data.

408: Optionally, the positioning device trains or updates the AI model based on the restored training data.

It should be understood that in AI-based downlink positioning, the training data restored by the positioning device includes the channel measurement result. Optionally, the channel measurement result comes from one or more second network elements. For one second network element, a positioning reference signal measured by the second network element comes from one or more third network elements. This is not limited. Different positioning reference signals are different from each other in terms of one or more of a sending moment, a sending frequency, an occupied frequency band, and a sending port. For example, one second network element obtains the channel measurement result by measuring positioning reference signals that come from a plurality of third network elements, or one second network element obtains the channel measurement result by measuring a plurality of positioning reference signals that come from one third network element.

It can be learned that, when the technical solution provided in this application is applied to the downlink positioning scenario, the PRU/UE performs clustering processing on the training data to classify the training data into the reference data and the non-reference data, and reports the full information of all the reference data and the incremental information of each piece of non-reference data relative to the reference data corresponding to the non-reference data. This can reduce overheads of reporting the training data.

### 2. AI-based uplink positioning

Machine learning can be used to enhance positioning accuracy. Several channel measurement results (such as a CIR, a CFR, and a PDP) are used as inputs of an AI model to obtain a final location of a UE. The AI model may be deployed on an LMF side, or the UE/a base station may extract characteristics of the channel measurement results by using the AI model. The LMF uses the extracted characteristics as inputs of the AI model to obtain the location of the UE.

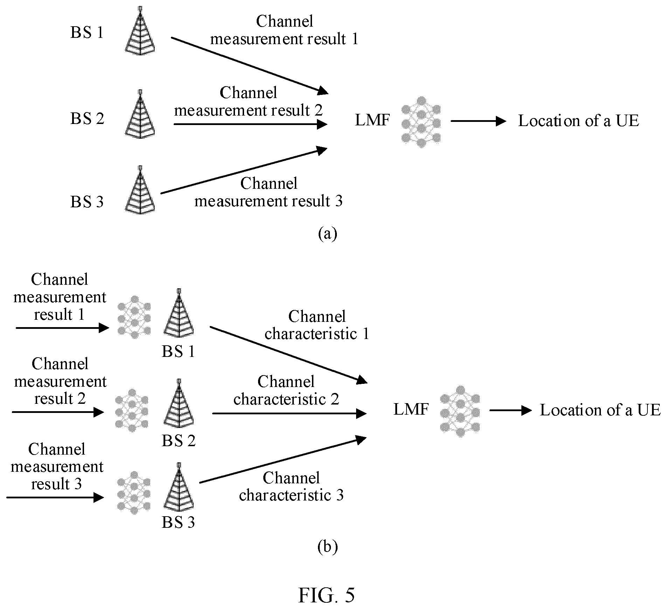

Uplink positioning is used as an example. To be specific, a UE sends a (sounding reference signal, SRS) to a base station, and the base station obtains a channel measurement result by measuring the SRS. FIG. 5 shows AI-based uplink positioning. (a) in FIG. 5 indicates that an AI model is deployed on an LMF side, base stations send channel measurement results to the LMF, and the LMF uses the channel measurement results of the plurality of base stations as inputs of the AI model, and outputs location information of a UE. Assuming that a quantity of antennas of a base station is 16 and a quantity of subcarriers is 4096, each base station needs to send 16*4096 complex values to the LMF. (b) in FIG. 5 indicates that AI models are deployed on base station sides and an LMF side. Each base station uses a channel measurement result as an input. The AI models on the base station sides extract characteristics of the channel measurement results and sends the characteristics to the LMF. The LMF uses the received channel characteristics as inputs and uses the AI model on the LMF side to obtain a location of the UE. A dimension of a channel characteristic is determined by an output dimension of an AI model on a base station side. For example, the base station side may extract a characteristic whose dimension is [128] from a channel measurement result whose dimension is [16, 4096], and send the characteristic to the LMF.

It should be understood that the characteristic of the channel measurement result mentioned in this embodiment of this application may be the channel measurement result, or may be the channel characteristic extracted by the AI model from the channel measurement result.

In uplink positioning, AI model training or updating is performed on a network side. A 5G system is used as an example. An AI model may be deployed on a positioning device in a core network, for example, an LMF network element. For uplink positioning, an input of the AI model is one or more channel measurement results corresponding to one or more sounding reference signals, and an output of the AI model is a location of a UE. There may be one or more transmit ends, for example, one or more UEs, of the one or more sounding reference signals, and there may be one or more receive ends, for example, one or more access network devices.

When training the AI model used for positioning, the positioning device obtains, from an access network side, a plurality of channel measurement results that are obtained by one access network device by measuring a plurality of sounding reference signals or obtained by each of a plurality of access network devices by measuring one or more sounding reference signals, and/or location information of a third network element (PRU/UE). The plurality of sounding reference signals may include a plurality of sounding reference signals that come from one third network element, or include one or more sounding reference signals that come from each of a plurality of third network elements. Location information of the third network element at different moments for sending the plurality of sounding reference signals, or location information of each of the plurality of third network elements at one or more moments for sending the one or more sounding reference signals is used as a ground label (that is, a label) of location information output by the AI model.

In uplink positioning, AI model training is performed by the positioning device on the network side, for example, an LMF network element. For the AI model deployed on the positioning device, the channel measurement result obtained by the access network device by measuring the sounding reference signal sent by the PRU/UE is used as an input, and a location of the PRU/UE is used as an output. During AI model training, the positioning device needs to obtain, from the PRU/UE side, the location information of the PRU/UE as a label of the AI model, and obtain, from the access network device side, the channel measurement result obtained by the access network device by measuring the SRS sent by the PRU/UE, to perform training.

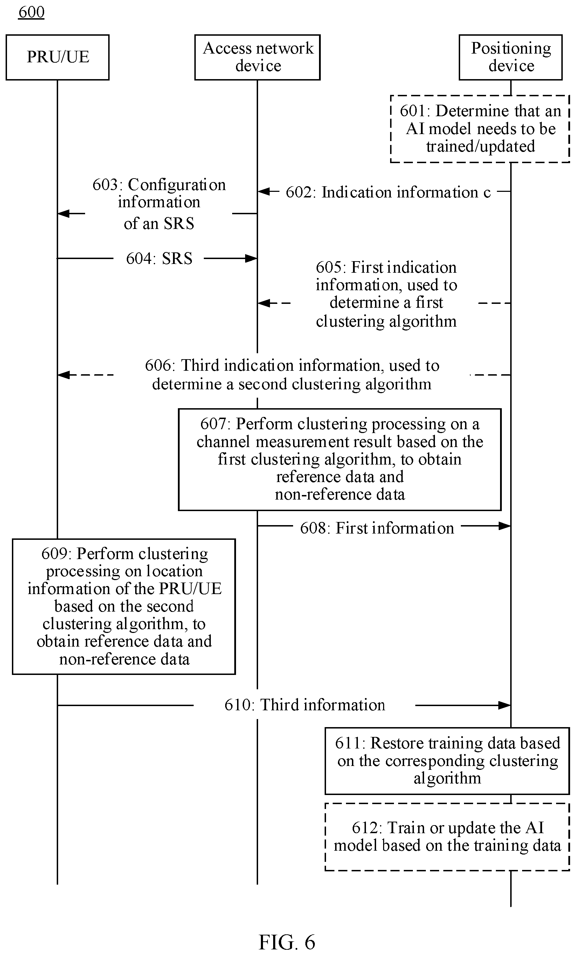

FIG. 6 shows an example of applying a technical solution provided in this application to AI-based uplink positioning. This example includes three possible cases as follows: In a possible case, the first network element is a positioning device, the second network element is an access network device, and the third network element is a PRU/UE. Training data reported by the second network element and received by the positioning device is specifically a channel measurement result obtained by the second network element by measuring an SRS sent by the PRU/UE.In another possible case, the first network element is a positioning device, and the second network element is a PRU/UE.Training data reported by the second network element and received by the positioning device is specifically location information of the PRU/UE.In still another possible case, the first network element is a positioning device, the second network element is an access network device, and the third network element is a PRU/UE.The positioning device receives training data reported by the second network element (which is specifically a channel measurement result obtained by the second network element by measuring an SRS sent by the PRU/UE) and training data reported by the third network element (which is specifically location information of the PRU/UE).

601: Optionally, the positioning device determines that an AI model needs to be trained or updated.

602: The positioning device sends indication information c to the access network device, where the indication information c indicates the access network device to configure the PRU/UE to send an SRS.

603: The access network device configures the UE to send the SRS.

604: The PRU/UE sends the SRS.

The access network device obtains a channel measurement result by measuring the SRS.

605: Optionally, the positioning device sends first indication information to the access network device, where the first indication information is used to determine a first clustering algorithm.

The access network device receives the first indication information from the positioning device.

Optionally, the first indication information further indicates the access network device to collect training data of the AI model. Alternatively, a separate piece of information may indicate the access network device to collect training data of the AI model. This is not limited.

606: Optionally, the positioning device sends third indication information to the PRU/UE, where the third indication information is used to determine a second clustering algorithm.

The PRU/UE receives the third indication information from the positioning device.

607: The access network device performs clustering processing on the channel measurement result based on the first clustering algorithm, to obtain reference data and non-reference data.

608: The access network device sends first information to the positioning device, where the first information includes first-type information and second-type information, and the first-type information and the second-type information that are included in the first information indicate training data provided by the access network device. Specifically, the training data provided by the access network device includes the channel measurement result obtained by the access network device by measuring the SRS sent by the PRU/UE.The first-type information included in the first information includes full information of a channel measurement result belonging to the reference data, and the second-type information included in the first information includes incremental information corresponding to a channel measurement result belonging to the non-reference data.

609: The PRU/UE performs clustering processing on location information of the PRU/UE based on the second clustering algorithm, to obtain reference data and non-reference data.

610: The PRU/UE sends third information to the positioning device, where the third information includes the first-type information and the second-type information. The first-type information and the second-type information that are included in the third information indicate training data provided by the PRU/UE. Specifically, the training data provided by the PRU/UE includes the location information of the PRU/UE. The first-type information included in the third information includes full information of location information belonging to the reference data, and the second-type information included in the third information includes incremental information corresponding to location information belonging to the non-reference data.

611: The positioning device restores, based on the first clustering algorithm and the first information from the access network device, all training data provided by the access network device, and/or the positioning device restores, based on the second clustering algorithm and the third information from the PRU/UE, all training data provided by the PRU/UE.

Optionally, in this example, the access network device and the PRU/UE perform, separately by using different clustering algorithms, clustering processing on the training data provided by the access network device and the PRU/UE.In another implementation, the access network device and the PRU/UE may alternatively perform, by using a same clustering algorithm, clustering processing on the training data provided by the access network device and the PRU/UE. This is not limited.

612: Optionally, the positioning device trains and/or updates the AI model based on the training data.

In this example, the technical solution provided in this application is applied to the uplink positioning scenario. The access network device and/or the PRU/UE perform/performs clustering processing on the provided training data to classify the training data into the reference data and the non-reference data, and report/reports the full information of the reference data and the incremental information of the non-reference data. This can reduce overheads of reporting the training data.

### 3. AI-based CSI prediction

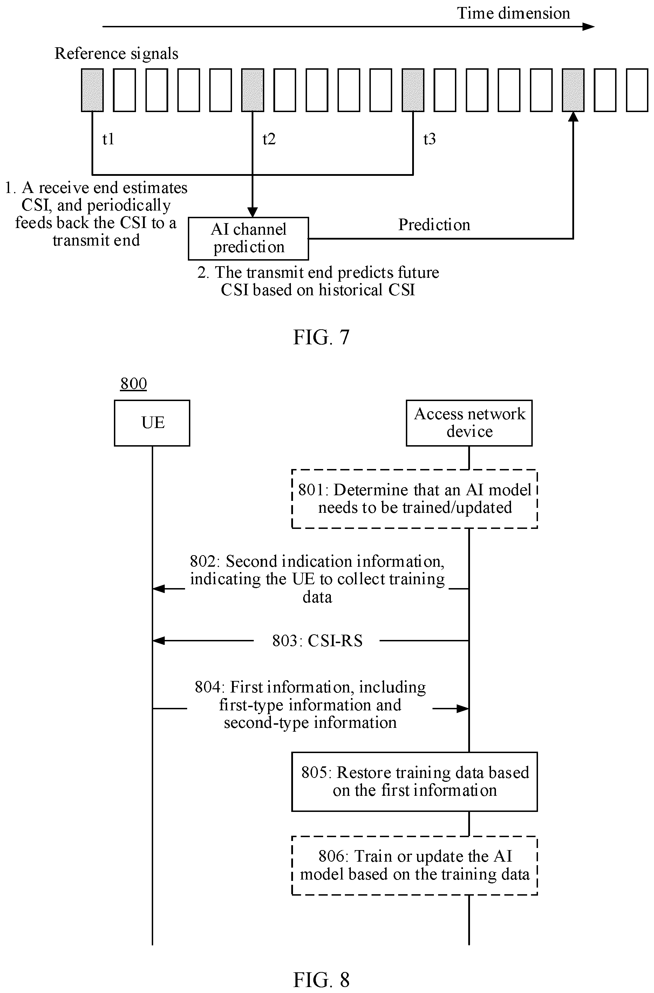

FIG. 7 is a diagram of CSI prediction based on an AI model. As shown in FIG. 7, a basic principle of the AI-CSI prediction is to use feature extraction and fitting capabilities of a neural network to train the neural network by using a training set including a large amount of offline CSI, so that the neural network can learn a channel change mode and fit a non-linear mapping relationship between historical CSI and future CSI, to replace a closed-form expression for channel prediction that is based on a mathematical model. At an inference stage, several pieces of historical CSI (for example, CSI fed back by a receive end and/or CSI predicted by a transmit end at a past moment) are input into a neural network used for channel prediction, and a predicted value of CSI at a future moment is output. The transmit end can predict CSI, and the receive end does not need to feed back estimated CSI at a prediction moment. Therefore, air interface CSI feedback overheads can be reduced.

In AI-based CSI prediction, when AI model training is performed on an access network side, an access network device needs to obtain a channel estimation result of one or more CSI-RSs on a UE side, and use the channel estimation result as a label to perform AI model training.

In another example, different from the foregoing embodiment in which the information obtained through clustering of the training data is reported, the second network element may report training data to the first network element by using a differential scheme in an AI-based CSI prediction scenario. The following provides descriptions with reference to FIG. 8. In this scenario, the first network element is an access network device, and the second network element is a UE.

FIG. 8 shows an example of applying a technical solution provided in this application to AI-based CSI prediction.

801: Optionally, the access network device determines that an AI model needs to be trained or updated.

802: The access network device sends second indication information to the UE, where the second indication information indicates the UE to collect training data of the AI model.

803: The access network device sends a CSI-RS to the UE.

The UE obtains a channel measurement result by measuring the CSI-RS that comes from the access network device.

804: The UE sends first information to the access network device, where the first information includes first-type information and second-type information, and the first-type information and the second-type information indicate training data provided by the UE.

Specifically, the training data provided by the UE includes reference data and non-reference data. The first-type information includes full information of a channel measurement result belonging to the reference data, and the second-type information includes incremental information of a channel measurement result belonging to the non-reference data relative to reference data corresponding to the channel measurement result belonging to the non-reference data. Optionally, in this example, the reference data and the non-reference data are not determined by using a clustering algorithm, but are negotiated or agreed by the first network element and the second network element in advance, preconfigured by the first network element, or predefined in a protocol. This is not limited. For example, the first network element preconfigures a period T for reporting training data by the second network element, and makes configuration to report non-reference data twice each time after reference data is reported. For example, full information of a channel measurement result obtained by the UE by measuring a CSI-RS is reported at a moment t1. In this case, the channel measurement result reported at the moment t1 belongs to reference data. When channel measurement results are reported at a moment t2 and a moment t3, differential values of the channel measurement results obtained by the UE by measuring CSI-RSs relative to the channel measurement result reported at the moment t1 are reported. To be specific, if the channel measurement results estimated at the moments t1 to t3 are respectively a channel measurement result 1, a channel measurement result 2, and a channel measurement result 3, full information of the channel measurement result 1 is reported at the moment t1, differential information (which is specifically a difference between the channel measurement result 2 and the channel measurement result 1) corresponding to the channel measurement result 2 is reported at the moment t2, and differential information (which is specifically a difference between the channel measurement result 3 and the channel measurement result 1) corresponding to the channel measurement result 3 is reported at the moment t3.

The access network device receives the first information from the UE.

Optionally, in step 804, sending of the training data is from a perspective of entire sending. Specifically, in the differential scheme, the first-type information and the second-type information may be sent by using different messages. For example, each time the UE obtains one channel measurement result, the UE may report the channel measurement result once. During specific reporting, if the channel measurement result obtained this time is reported as reference data, the UE sends the first-type information to indicate full information of the reference data; or if the channel measurement result obtained this time is reported as non-reference data, the UE sends the second-type information to indicate incremental information corresponding to the non-reference data. For example, if the channel measurement result corresponding to the moment t1 is reference data, the first-type information is sent at the moment t1 to indicate full information of the channel measurement result 1. If the channel measurement result corresponding to the moment t2 or the moment t3 is non-reference data, the second-type information is sent at the moment t2 or the moment t3 to separately indicate incremental information of the channel measurement result obtained at the moment t2 or the moment t3 relative to the channel measurement result 1. Therefore, step 804 may be alternatively split into a plurality of steps, and each step is corresponding to one time of sending full information of reference data or is corresponding to one time of sending incremental information corresponding to non-reference data.

Optionally, a time-domain differential scheme is used as an example in the foregoing example, and training data may be alternatively reported by using a frequency-domain differential scheme. For example, at a moment t1, the UE reports full information of a channel measurement result 1 obtained by measuring a CSI-RS on a subband 1, and differential information, namely, incremental information, of a channel measurement result 2 to a channel measurement result N respectively relative to the channel measurement result 1. The channel measurement result 2 to the channel measurement result N are channel measurement results obtained by the UE by measuring CSI-RSs on a subband 2 to a subband N. In the frequency-domain differential scheme, the channel measurement result 1 obtained through measurement by the UE on the subband 1 is used as reference data, and in this case, the full information is reported; and the channel measurement result 2 to the channel measurement result N respectively obtained on the subband 2 to the subband N are all used as non-reference data, and in this case, the corresponding incremental information is reported. A manner of reporting training data at a moment t2 and a moment t3 is the same as that at the moment t1. Details are not described again.

805: The access network device restores, based on the first information, all the training data provided by the UE.

806: Optionally, the access network device trains or updates the AI model based on the training data.

In this example, the technical solution provided in this application is applied to the AI-based CSI prediction scenario. The UE performs clustering processing on the provided training data to classify the training data into the reference data and the non-reference data, and reports the full information of the reference data and the incremental information of the non-reference data. This can reduce overheads of reporting the training data.

### 4. AI-based CSI feedback

In communication systems such as LTE and NR, a base station needs to obtain downlink channel state information (channel state information, CSI), to determine configurations such as a resource for scheduling a downlink data channel of a UE, a modulation and coding scheme (modulation and coding scheme, MCS), and precoding. In a time division duplex (time division duplex, TDD) system, because there is reciprocity between an uplink channel and a downlink channel, the base station may obtain uplink CSI by measuring an uplink reference signal, to infer accurate downlink CSI, for example, use the uplink CSI as the downlink CSI. In a frequency division duplex (frequency division duplex, FDD) system, uplink and downlink reciprocity cannot be ensured, and downlink CSI is obtained by the UE by measuring a downlink reference signal. For example, the UE obtains the downlink CSI by measuring a CSI-RS or a synchronization signal block (synchronization signal/physical broadcast channel block, SSB). Therefore, the UE needs to generate a CSI report in a manner predefined in a protocol or configured by the base station, and feed back the CSI to the base station, so that the base station obtains the downlink CSI.

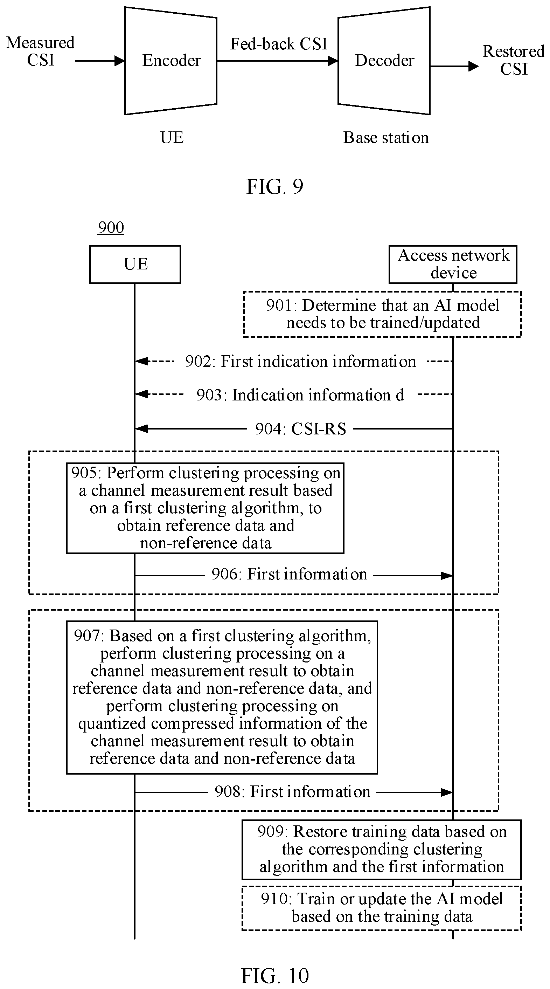

FIG. 9 is a diagram of an AI-based CSI feedback process. In the AI-CSI feedback, when an AI model is deployed on an access network device side, the access network device needs to obtain an estimation result of a CSI-RS on a UE side, and use the estimation result as a label (also referred to as a ground truth) to perform training. An AE model includes two sub-models: an encoder (encoder) and a decoder (decoder). An AE may generally refer to a network structure including two sub-models. The AE model may also be referred to as a bilateral model, a dual-ended model, or a collaborative model. The encoder and the decoder of the AE are usually trained together and may be used collaboratively. The CSI feedback may be implemented based on an AI model of the AE. For example, the UE side performs CSI compression and quantization via the encoder, and the access network device performs CSI restoration via the decoder. As shown in FIG. 9, for the access network device, an input of the AI model is CSI fed back by the UE side, and an output is restored CSI. CSI measured by the UE side needs to be used as a ground truth of the restored CSI in model training.

FIG. 10 shows an example of applying a technical solution provided in this application to AI-based CSI feedback.

901: Optionally, an access network device determines that an AI model needs to be trained or updated.

902: Optionally, the access network device sends first indication information to a UE, where the first indication information is used by the UE to determine a first clustering algorithm.

Optionally, the first clustering algorithm may be predefined in a protocol.

903: Optionally, the access network device sends indication information d to the UE, where the indication information d indicates the UE to collect training data.

904: The access network device sends a CSI-RS to the UE.

The UE obtains a channel measurement result by measuring the CSI-RS that comes from the access network device.

In a possible case, if the AI model on the UE side is delivered by the access network device (or the AI model is jointly trained by the access network side and the UE side), the UE performs clustering processing on the channel measurement result based on the first clustering algorithm, to obtain reference data and non-reference data. Further, the UE reports full information of the reference data and incremental information of the non-reference data relative to reference data corresponding to the non-reference data to the access network device, as shown in steps 905 and 906.

905: The UE performs clustering processing on the channel measurement result based on the first clustering algorithm, to obtain the reference data and the non-reference data.

906: The UE sends first information to the access network device, where the first information includes first-type information and second-type information, and the first-type information and the second-type information indicate training data provided by the UE. The training data includes the reference data and the non-reference data. The first-type information includes full information of a channel measurement result belonging to the reference data, and the second-type information includes incremental information corresponding to a channel measurement result belonging to the non-reference data.

In another possible case, the AI model on the UE side does not depend on training and delivery by the access network side (that is, the access network side and the UE side separately perform training). In this case, the UE separately performs clustering on the channel measurement result and quantized compressed information corresponding to the channel measurement result, and reports information obtained through clustering, as shown in steps 907 and 908.

907: Based on the first clustering algorithm, the UE performs clustering processing on the channel measurement result to obtain reference data and non-reference data regarding the channel measurement result, and performs clustering on the quantized compressed information of the channel measurement result to obtain reference data and non-reference data regarding the quantized compressed information.

Optionally, a same clustering algorithm or different clustering algorithms may be used for the channel measurement result and the quantized compressed information of the channel measurement result. This is not limited.

908: The UE sends first information to the access network device, where the first information includes first-type information and second-type information, and the first-type information and the second-type information indicate training data provided by the UE. The training data includes the channel measurement result and the quantized compressed information of the channel measurement result. Specifically, the first-type information includes full information of a channel measurement result belonging to the reference data and full information of quantized compressed information of the reference data, and the second-type information includes incremental information corresponding to a channel measurement result belonging to the non-reference data and incremental information corresponding to quantized compressed information of the non-reference data.

909: The access network device restores all the training data based on the corresponding clustering algorithm and the first information.

910: Optionally, the access network device trains or updates the AI model based on the training data.

In this example, the technical solution provided in this application is applied to the AI-based CSI feedback scenario. The UE performs clustering processing on the provided training data to classify the training data into the reference data and the non-reference data, and reports the full information of the reference data and the incremental information of the non-reference data. This can reduce overheads of reporting the training data.

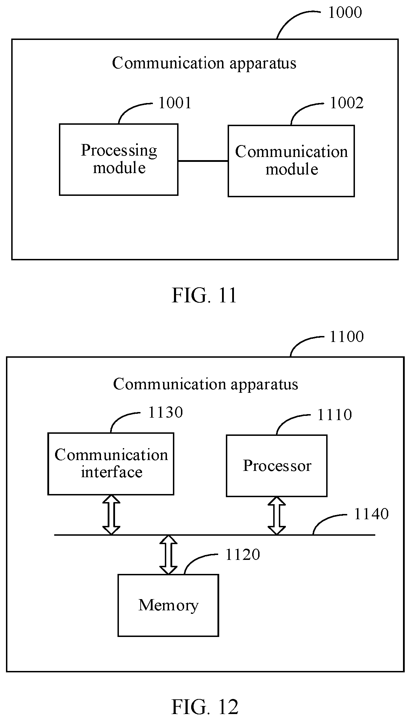

The foregoing details the method for reporting the training data of the AI model provided in this application. The following describes corresponding communication apparatuses. With reference to FIG. 11, this application provides a communication apparatus 1000.

As shown in FIG. 11, the communication apparatus 1000 includes a processing module 1001 and a communication module 1002. The communication apparatus 1000 may be a terminal device, or may be a communication apparatus that is used in the terminal device, that is used collaboratively with the terminal device, or that can implement a method performed on a terminal device side, for example, a chip, a chip system, or a circuit. Alternatively, the communication apparatus 1000 may be a network device, or may be a communication apparatus that is used in the network device, that is used collaboratively with the network device, or that can implement a method performed on a network device side, for example, a chip, a chip system, or a circuit. For example, the network device may be a positioning device, an access network device, or the like in the method embodiments of this application.

The communication module may also be referred to as a transceiver module, a transceiver, a transceiver apparatus, or the like. The processing module may also be referred to as a processor, a processing board, a processing unit, a processing apparatus, or the like. Optionally, the communication module is configured to perform a sending operation and a receiving operation on the terminal device side or the network device side in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1000 is used in the terminal device, the processing module 1001 may be configured to implement a processing function of the terminal device in the embodiments in FIG. 2 to FIG. 10, and the communication module 1002 may be configured to implement receiving and sending functions of the terminal device in the embodiments in FIG. 2 to FIG. 10.

When the communication apparatus 1000 is used in the network device, the processing module 1001 may be configured to implement a processing function of the network device (for example, the positioning device or the access network device) in the embodiments in FIG. 2 to FIG. 10, and the communication module 1002 may be configured to implement receiving and sending functions of the network device in the embodiments in FIG. 2 to FIG. 10.

It should be noted that, the first network element or the second network element shown in FIG. 2 may be specifically different network elements in different application scenarios, which are detailed in the foregoing method embodiments. Specific implementation of the first network element or the second network element can be understood in the method embodiments. Details are not described again.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

Based on a same technical concept, with reference to FIG. 12, this application further provides a communication apparatus 1100. Optionally, the communication apparatus 1100 may be a chip or a chip system. Optionally, in this application, the chip system may include a chip, or may include a chip and another discrete device.

The communication apparatus 1100 may be configured to implement functions of any network element in the communication system described in the foregoing examples. The communication apparatus 1100 may include at least one processor 1110. Optionally, the processor 1110 is coupled to a memory. The memory may be located in the apparatus, the memory may be integrated with the processor, or the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or another type of communication interface. When the communication apparatus 1100 is a chip-type apparatus or circuit, the communication interface 1130 in the apparatus 1100 may alternatively be an input/output circuit, and may input information (or receive information) and output information (or send information). The processor is an integrated processor, a microprocessor, an integrated circuit, or a logic circuit. The processor may determine output information based on input information.

The coupling in this application may be an indirect coupling or a communication connection between apparatuses, units, or modules, may be implemented in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, as shown in FIG. 11, the processor 1110, the memory 1120, and the communication interface 1130 are connected to each other through a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 11, but this does not mean that there is only one bus or one type of bus.

In this application, the processor may be a general-purpose processor, a digital signal processor, an application-specific integrated circuit, a field programmable gate array, another programmable logic device, a discrete gate, a transistor logic device, or a discrete hardware component, and may implement or perform methods, steps, and logical block diagrams that are disclosed in this application. The general-purpose processor may be a microprocessor, any conventional processor or the like. The steps of the methods disclosed with reference to this application may be directly implemented by a hardware processor, or may be implemented by a combination of hardware in a processor and a software module.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that is accessible to a computer, but is not limited thereto. The memory in this application may be alternatively a circuit or any other apparatus that can implement a storage function, and is configured to store program instructions and/or data.

In a possible implementation, the communication apparatus 1100 may be used in a network device side, for example, an access network device or a core network device (for example, a positioning device, which is specifically an LMF network element) in embodiments of this application, or a host or a cloud device in an OTT system. Specifically, the communication apparatus 1100 may be a network device, or may be an apparatus that can support the network device in implementing corresponding functions of the network device side in any one of the foregoing examples. The memory 1120 stores a computer program (or instructions) and/or data for implementing the functions of the network device side in any one of the foregoing examples. The processor 1110 may execute the computer program stored in the memory 1120, to complete the method performed by the network device side in any one of the foregoing examples. The communication interface in the communication apparatus 1100 may be configured to interact with a terminal device, to send information to the terminal device or receive information from the terminal device. In addition, optionally, the communication interface in the communication apparatus 1000 may be further configured to interact with another network element (for example, a third network element), to receive a reference signal from the third network element, or the like.

In another possible implementation, the communication apparatus 1100 may be used in a terminal device. Specifically, the communication apparatus 1100 may be a terminal device, or may be an apparatus that can support the terminal device in implementing functions of the terminal device in any one of the foregoing examples. The memory 1120 stores a computer program (or instructions) and/or data for implementing the functions of the terminal device in any one of the foregoing examples. The processor 1110 may execute the computer program stored in the memory 1120, to complete the method performed by the terminal device in any one of the foregoing examples. The communication interface in the communication apparatus 1100 may be configured to interact with a network device side (for example, an access network device), to send information to the network device side or receive information from the network device side.

The communication apparatus 1100 provided in this example may be used in the network device side (for example, the access network device) to complete the method performed by the network device side, or may be used in the terminal device to complete the method performed by the terminal device. Therefore, for technical effects that can be achieved by the communication apparatus 1100, refer to the foregoing method embodiments. Details are not described herein again.

Based on the foregoing examples, this application provides a communication system. In an example, the communication system includes a first network element and a second network element. In another example, the communication system includes a first network element, a second network element, and a third network element. The communication system may implement the method for reporting the training data of the AI model provided in the embodiments shown in FIG. 2 to FIG. 10.

All or some of the technical solutions provided in this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

The units described as separate parts may or may not be physically separate, and parts displayed as units may or may not be physical units. To be specific, the parts may be located in one position or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or two or more units may be integrated into one unit.

At least one (item) in embodiments of this application indicates one (item) or more (items). "A plurality of (items) "means two (items) or more (items). A term "and/or" describes an association relationship for describing associated objects and represents that three relationships may exist. For example, A and/or B may represent the following three cases: Only A exists, both A and B exist, and only B exists. A character "/" generally indicates an "or" relationship between associated objects. In addition, it should be understood that although terms "first", "second", and the like may be used in this disclosure to describe objects, these objects are not limited to these terms. These terms are merely used to distinguish the objects from each other.

In embodiments of this application, "indication information a/indication information b" and the like are merely a representation method for distinguishing between different information, for example, may be represented as indication information #1/indication information #2 and the like. This should not constitute any limitation on the technical solutions.

A term "include" and any other variant thereof mentioned in embodiments of this application are intended to cover non-exclusive inclusion. For example, a process, method, system, product, or device that includes a series of steps or units is not limited to the listed steps or units, but optionally further includes other unlisted steps or units, or optionally further includes other steps or units inherent to the process, method, product, or device. It should be noted that in this application, a term "example", "for example", or the like is used to give an example, an illustration, or a description. Any method or design scheme described as "example" or "for example" in this application should not be construed as being preferred or having more advantages over other methods or design schemes. Exactly, use of the term "example", "for example", or the like is intended to present a related concept in a specific manner.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

A person skilled in the art can make various modifications and variations to this application without departing from the scope of this application. In this way, this application is intended to cover these modifications and variations of this application provided that they fall within the scope defined by the following claims and equivalent technologies of this application.

## Claims

1. A method for sending training data of an AI model, comprising:
receiving, by a first network element, first information from a second network element, wherein the first information comprises first-type information and second-type information, and the first-type information and the second-type information indicate training data of the AI model that is provided by the second network element, wherein
the training data comprises one or more pieces of reference data and non-reference data, the first-type information comprises full information of the one or more pieces of reference data, and the second-type information comprises incremental information of the non-reference data relative to reference data corresponding to the non-reference data.

2. The method according to claim 1, wherein the one or more pieces of reference data are determined from the training data based on a first clustering algorithm.

3. The method according to claim 2, wherein before the receiving, by the first network element, the first information from the second network element, the method further comprises:
sending, by the first network element, first indication information to the second network element, wherein the first indication information is used to determine the first clustering algorithm.

4. The method according to claim 3, wherein the AI model is applied to downlink positioning, the first network element comprises a location management function LMF network element, and the second network element comprises a terminal device; and
the training data comprises a channel measurement result and/or location information of the second network element, and the channel measurement result is obtained by the second network element based on a positioning reference signal that comes from a third network element.

5. The method according to claim 4, wherein if the training data comprises the channel measurement result, the channel measurement result comprises a channel measurement result belonging to the reference data and a channel measurement result belonging to the non-reference data, the first-type information comprises full information of the channel measurement result belonging to the reference data, and the second-type information comprises incremental information corresponding to the channel measurement result belonging to the non-reference data;
or
if the training data comprises the location information of the second network element, the location information comprises location information belonging to the reference data and location information belonging to the non-reference data, the first-type information comprises full information of the location information belonging to the reference data, and the second-type information comprises incremental information corresponding to the location information belonging to the non-reference data;
or
if the training data comprises the channel measurement result and the location information of the second network element, the channel measurement result comprises a channel measurement result belonging to the reference data and a channel measurement result belonging to the non-reference data, the location information comprises location information belonging to the reference data and location information belonging to the non-reference data, the first-type information comprises full information of the channel measurement result belonging to the reference data and full information of the location information belonging to the reference data, and the second-type information comprises incremental information corresponding to the channel measurement result belonging to the non-reference data and incremental information corresponding to the location information belonging to the non-reference data.

6. The method according to claim 3, wherein the AI model is applied to uplink positioning, the first network element comprises a location management function LMF network element, and the second network element comprises an access network device; and
the training data comprises a channel measurement result, the channel measurement result is obtained by the second network element based on a sounding reference signal that comes from a third network element, the channel measurement result comprises a channel measurement result belonging to the reference data and a channel measurement result belonging to the non-reference data, the first-type information comprises full information of the channel measurement result belonging to the reference data, and the second-type information comprises incremental information corresponding to the channel measurement result belonging to the non-reference data.

7. The method according to claim 3, wherein the AI model is applied to uplink positioning, the first network element comprises a location management function LMF network element, and the second network element comprises a terminal device; and
the training data comprises location information of the second network element, the location information comprises location information belonging to the reference data and location information belonging to the non-reference data, the first-type information comprises full information of the location information belonging to the reference data, and the second-type information comprises incremental information corresponding to the location information belonging to the non-reference data.

8. The method according to claim 3, wherein the AI model is applied to uplink positioning, the first network element comprises a location management function LMF network element, and the second network element comprises an access network device; and
the method further comprises:
receiving, by the first network element, third information from the third network element, wherein the third information comprises the first-type information and the second-type information, and the first-type information and the second-type information that are comprised in the third information indicate training data provided by the third network element, wherein
the training data comprises the training data provided by the second network element and the training data provided by the third network element, the training data provided by the second network element comprises a channel measurement result, the channel measurement result comprises a channel measurement result belonging to the reference data and a channel measurement result belonging to the non-reference data, the training data provided by the third network element comprises location information of the third network element, and the location information comprises location information belonging to the reference data and location information belonging to the non-reference data;
the first-type information comprised in the first information comprises full information of the channel measurement result belonging to the reference data, and the second-type information comprised in the first information comprises incremental information corresponding to the channel measurement result belonging to the non-reference data; and
the first-type information comprised in the third information comprises full information of the location information belonging to the reference data, and the second-type information comprised in the third information comprises incremental information corresponding to the location information belonging to the non-reference data.

9. The method according to claim 3, wherein the AI model is applied to channel state information CSI prediction, the first network element comprises an access network device, and the second network element comprises a terminal device;
the training data comprises a CSI estimation result obtained by the second network element based on a channel state information-reference signal CSI-RS that comes from the first network element, and the CSI estimation result comprises a CSI estimation result belonging to the reference data and a CSI estimation result belonging to the non-reference data; and
the first-type information comprises full information of the CSI estimation result belonging to the reference data, and the second-type information comprises incremental information corresponding to the CSI estimation result belonging to the non-reference data.

10. The method according to claim 3, wherein the AI model is applied to channel state information CSI feedback, the first network element comprises an access network device, and the second network element comprises a terminal device; and
the training data comprises a CSI estimation result obtained by the second network element based on a channel state information-reference signal CSI-RS that comes from the first network element, or the training data comprises a CSI estimation result obtained by the second network element based on the CSI-RS and quantized compressed information corresponding to the CSI estimation result.

11. The method according to claim 10, wherein the training data comprises the CSI estimation result, the CSI estimation result comprises a CSI estimation result belonging to the reference data and a CSI estimation result belonging to the non-reference data, the first-type information comprises full information of the CSI estimation result belonging to the reference data, and the second-type information comprises incremental information corresponding to the CSI estimation result belonging to the non-reference data;
or
the training data comprises the CSI estimation result and the quantized compressed information of the CSI estimation result, the CSI estimation result comprises a CSI estimation result belonging to the reference data and a CSI estimation result belonging to the non-reference data, the first-type information comprises full information of the CSI estimation result belonging to the reference data and full information of quantized compressed information of the CSI estimation result belonging to the reference data, and the second-type information comprises incremental information corresponding to the CSI estimation result belonging to the non-reference data and incremental information corresponding to quantized compressed information of the CSI estimation result belonging to the non-reference data.

12. A method for sending training data of an AI model, comprising:
sending, by a second network element, first information to a first network element, wherein the first information comprises first-type information and second-type information, and the first-type information and the second-type information indicate training data of the AI model that is provided by the second network element, wherein
the training data comprises one or more pieces of reference data and non-reference data, the first-type information comprises full information of the one or more pieces of reference data, and the second-type information comprises incremental information of the non-reference data relative to reference data corresponding to the non-reference data.

13. The method according to claim 12, wherein the one or more pieces of reference data are determined from the training data based on a first clustering algorithm.

14. The method according to claim 13, wherein before the sending, by the second network element, the first information to the first network element, the method further comprises:
receiving, by the second network element, first indication information from the first network element, wherein the first indication information is used to determine the first clustering algorithm; and
determining, by the second network element, the first clustering algorithm based on the first indication information.

15. The method according to claim 14, wherein the AI model is applied to downlink positioning, the second network element comprises a terminal device, and the first network element comprises a location management function LMF network element; and
the training data comprises a channel measurement result and/or location information of the second network element, and the channel measurement result is obtained by the second network element based on a positioning reference signal that comes from a third network element.

16. The method according to claim 15, wherein if the training data comprises the channel measurement result, the channel measurement result comprises a channel measurement result belonging to the reference data and a channel measurement result belonging to the non-reference data, the first-type information comprises full information of the channel measurement result belonging to the reference data, and the second-type information comprises incremental information corresponding to the channel measurement result belonging to the non-reference data;
or
if the training data comprises the location information of the second network element, the location information comprises location information belonging to the reference data and location information belonging to the non-reference data, the first-type information comprises full information of the location information belonging to the reference data, and the second-type information comprises incremental information corresponding to the location information belonging to the non-reference data;
or
if the training data comprises the channel measurement result and the location information of the second network element, the channel measurement result comprises a channel measurement result belonging to the reference data and a channel measurement result belonging to the non-reference data, the location information comprises location information belonging to the reference data and location information belonging to the non-reference data, the first-type information comprises full information of the channel measurement result belonging to the reference data and full information of the location information belonging to the reference data, and the second-type information comprises incremental information corresponding to the channel measurement result belonging to the non-reference data and incremental information corresponding to the location information belonging to the non-reference data.

17. The method according to claim 14, wherein the AI model is applied to uplink positioning, the second network element comprises an access network device, and the first network element comprises a location management function LMF network element; and
the training data comprises a channel measurement result, the channel measurement result is obtained by the second network element based on a sounding reference signal that comes from a third network element, the channel measurement result comprises a channel measurement result belonging to the reference data and a channel measurement result belonging to the non-reference data, the first-type information comprises full information of the channel measurement result belonging to the reference data, and the second-type information comprises incremental information corresponding to the channel measurement result belonging to the non-reference data.

18. The method according to claim 14, wherein the AI model is applied to uplink positioning, the second network element comprises a terminal device, and the first network element comprises a location management function LMF network element; and
the training data comprises location information of the second network element, the location information comprises location information belonging to the reference data and location information belonging to the non-reference data, the first-type information comprises full information of the location information belonging to the reference data, and the second-type information comprises incremental information corresponding to the location information belonging to the non-reference data.

19. The method according to claim 14, wherein the AI model is applied to uplink positioning, the second network element comprises an access network device, and the first network element comprises a location management function LMF network element;
the training data provided by the second network element comprises a channel measurement result, and the channel measurement result comprises a channel measurement result belonging to the reference data and a channel measurement result belonging to the non-reference data; and
the first-type information comprised in the first information comprises full information of the channel measurement result belonging to the reference data, and the second-type information comprised in the first information comprises incremental information corresponding to the channel measurement result belonging to the non-reference data.

20. The method according to claim 14, wherein the AI model is applied to CSI prediction, the second network element comprises a terminal device, and the first network element comprises an access network device;
the training data comprises a CSI estimation result obtained by the second network element based on a channel state information-reference signal CSI-RS that comes from the first network element, and the CSI estimation result comprises a CSI estimation result belonging to the reference data and a CSI estimation result belonging to the non-reference data; and
the first-type information comprises full information of the CSI estimation result belonging to the reference data, and the second-type information comprises incremental information corresponding to the CSI estimation result belonging to the non-reference data.

21. The method according to claim 14, wherein the AI model is applied to CSI feedback, the second network element comprises a terminal device, and the first network element comprises an access network device; and
the training data comprises a CSI estimation result obtained by the second network element based on a channel state information-reference signal CSI-RS that comes from the first network element, or the training data comprises a CSI estimation result obtained by the second network element based on the CSI-RS and quantized compressed information corresponding to the CSI estimation result.

22. The method according to claim 21, wherein the training data comprises the CSI estimation result, the CSI estimation result comprises a CSI estimation result belonging to the reference data and a CSI estimation result belonging to the non-reference data, the first-type information comprises full information of the CSI estimation result belonging to the reference data, and the second-type information comprises incremental information corresponding to the CSI estimation result belonging to the non-reference data;
or
the training data comprises the CSI estimation result and the quantized compressed information of the CSI estimation result, the CSI estimation result comprises a CSI estimation result belonging to the reference data and a CSI estimation result belonging to the non-reference data, the first-type information comprises full information of the CSI estimation result belonging to the reference data and full information of quantized compressed information of the CSI estimation result belonging to the reference data, and the second-type information comprises incremental information corresponding to the CSI estimation result belonging to the non-reference data and incremental information corresponding to quantized compressed information of the CSI estimation result belonging to the non-reference data.

23. A communication apparatus, configured to implement any one of claims 1 to 22.

24. A communication apparatus, comprising:
a processor, wherein the processor is coupled to a memory, and the processor is configured to invoke computer program instructions stored in the memory, to perform the method according to any one of claims 1 to 22.

25. A computer-readable storage medium, wherein the computer-readable storage medium stores instructions, and when the instructions are runs on a computer, the computer is enabled to perform the method according to any one of claims 1 to 22.

26. A computer program product, wherein the computer-readable storage medium stores instructions, and when the instructions are runs on a computer, the computer is enabled to perform the method according to any one of claims 1 to 22.

27. A communication system, comprising the communication apparatus according to claim 23 or 24.
